# EUROPEAN PATENT SPECIFICATION

(11) **EP 3 415 113 B1**
(45) Date of publication and mention of the grant of the patent: **01.07.2020**
(21) Application number: 18177573.5
(22) Date of filing: 13.06.2018
(51) Int. Cl.: A61C 8/00

(54) **COMBINATION IMPRESSION COPING AND SCAN BODY**
KOMBINATIONSABFORMKAPPE UND SCANKÖRPER
TRANSFERT D'EMPREINTE DE COMBINAISON ET CORPS DE BALAYAGE

(30) Priority: 13.06.2017 US 201762518698 P
(43) Date of publication of application: 19.12.2018
(73) Proprietor: Biomet 3I, LLC, Florida 33410 (US)
(72) Inventor: MONTERO, Miguel, Boynton Beach, FL Florida 33472 (US); CHELMINSKI, Alexander, Palm Beach Gardens, FL Florida 33410 (US)
(74) Representative: Mays, Julie

(56) References cited:
- WO-A1-2015/046675
- US-A- 4 955 811
- US-A- 5 334 024
- US-A1- 2015 017 600
- US-A1- 2017 112 598

## Description

### FIELD OF THE DISCLOSURE

The present disclosure relates to various dental implant components, such as combination impression copings and scan bodies, and method of producing a dental model using the scan coping.

### BACKGROUND

An impression coping can be used in a dental procedure to facilitate the creation of a dental impression. As an example, an impression coping can be attached to a dental implant installed in the jaw of a patient, and dental impression material can be poured around the impression coping and the implant to create an impression of the patient's dental structures and the impression coping. From the dental impression, a positive model of the patient's dental structures can be made (*e.g.,* a stone or gypsum model).

In some procedures, a scan body can also be used to assist with creating a custom dental prosthesis for a patient. A scan body can be a dental component that is attached to a dental model and scanned. The scan body can assist in providing data to software for digitizing a dental model and designing a dental prosthesis. Typically, a scan body is a separate component that must be attached to a dental model and scanned, such that appropriate data concerning the patient's dental structures and/or the dental implant can be provided to the prosthetic design software. Further, other components might need to be attached to the dental model during the design of the dental prosthetic, creating a complicated set of parts.

Prior art US2015/0017600 discloses a universal scanning member for use on dental implant and dental implant analogs, while WO2015046675 discloses a production method for implant scan abutments.

It is therefore an object of the present disclosure to provide improved dental components and methods of use thereof for creating tooth prostheses.

### SUMMARY

The invention is as defined in the appended claims.

### BRIEF DESCRIPTION OF THE FIGURES

The above-mentioned and other features and advantages of this disclosure, and the manner of attaining them, will become more apparent and the disclosure itself will be better understood by reference to the following description of examples taken in conjunction with the accompanying drawings, wherein:
Fig. 1A is a perspective view of a combination impression coping and scan body, according to an example of the disclosure, and Figs. 1B-C are perspective views of a set of fixation members (*e.g.,* screws) usable therewith.
Fig. 2A is a cross-sectional view of the combination impression coping and scan body of Fig. 1A attached to an exemplary dental implant.
Fig. 2B is a cross-sectional view of the combination impression coping and scan body of Fig. 1A attached to an exemplary dental implant analog.
Fig. 2C is a close-up view of a portion of the interface between the combination impression coping and scan body of Fig. 1A and the dental implant analog of Fig. 2B.
Figs. 3A-C illustrate various kits of combination impression coping and scan bodies, according to an example of the disclosure.
Figs. 4A-G illustrate an exemplary method of using the combination impression coping and scan body of Fig. 1A in an open-tray dental impression and modeling procedure.
Figs. 5A-G illustrate an exemplary method of using the combination impression coping and scan body of Fig. 1A in a closed-tray dental impression and modeling procedure.
Fig. 6 is a perspective view of the combination impression coping and scan body of Fig. 1A attached to an exemplary dental model.

Corresponding reference characters indicate corresponding parts throughout the several views. The exemplifications set out herein illustrate examples of the disclosure, and such exemplifications are not to be construed as limiting the scope of the disclosure any manner.

### DETAILED DESCRIPTION

In describing the examples of the disclosure illustrated and to be described with respect to the drawings, specific terminology will be used for the sake of clarity.

The present disclosure is directed at various designs for impression copings, which can also act as scan bodies. As such, the phrase "combination impression coping and scan body" is sometimes used throughout the disclosure to refer to such a dental component. At other points of the disclosure, only the phrase impression coping is used to refer to the applicable component (*e.g.,* merely for brevity's sake). The combination impression coping and scan body can be used to take a dental impression of a patient's dental structures and/or a dental implant installed in the patient. Subsequently, the same combination impression coping and scan body can form part of a dental model and be scanned using scanning equipment - *i.e.,* the impression coping can act as a scan body in the development of a custom dental prosthesis (*e.g.,* a crown). Further, the combination impression coping and scan body can be versatile in that it can be used in open-tray dental impression/modeling techniques, or closed-tray dental impression/modeling techniques. As such, the combination impression coping and scan body can be considered multi-functional. For example, it can act as an impression coping, a scan body, and it can be used in either open-tray or closed-tray dental impression/modeling techniques.

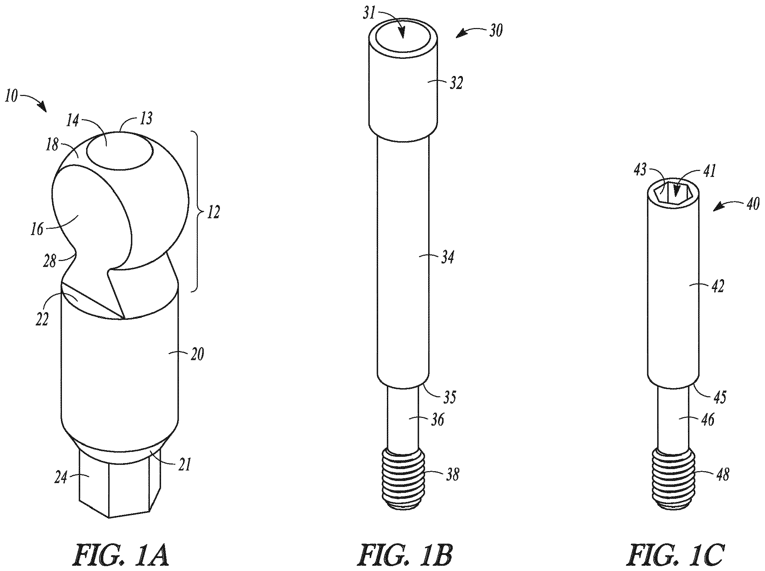

Referring to Fig. 1A, a combination impression coping and scan body 10 is shown. Impression coping 10 has a head 12, a body 20, and a projection 24. Head 12 has a bulbous shape. Head 12 has flat sides 16 and round sides 18, which define the bulbous shape. In addition, a bore 14 can extend partly or entirely through impression coping 10, as shown. Flat sides 16 of head 12 extend from a coronal end 13 of impression coping 10 to a ledge 22. In an example, each ledge 22 can be a portion of body 20 of impression coping that extends outwards relative to flat sides 16. Round sides 18 can connect each of flat sides 16 of head 12, as shown in Fig. 1A. In addition, a groove 28 can be present in head 12 of impression coping 10 that can bifurcate or divide round sides 18 of head 12.

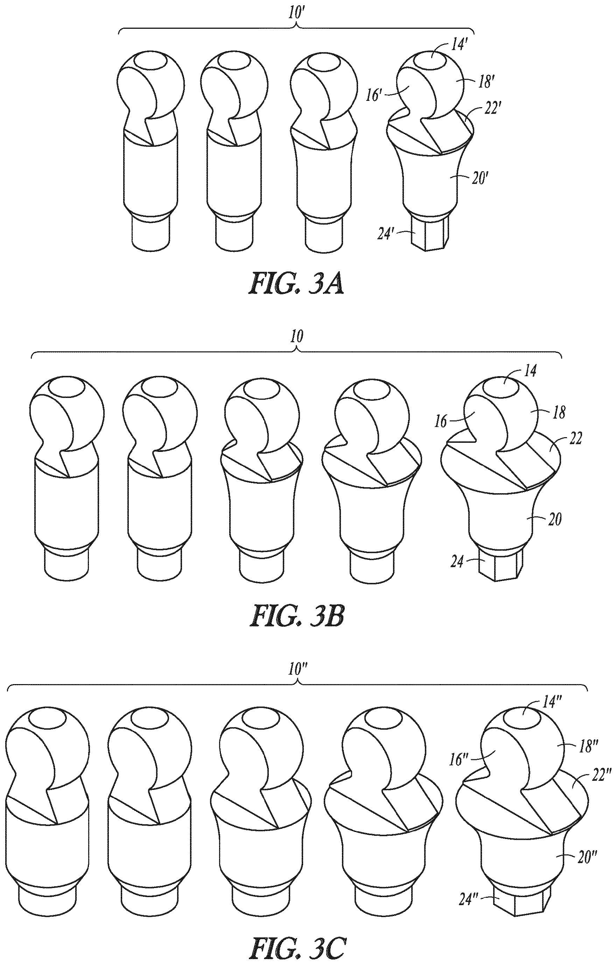

Still referring to Fig. 1A, body 20 of impression coping 10 can be cylindrical or part cylindrical, although other shapes are contemplated, as shown in Figs. 3A-C (discussed below). A projection 24 extends apically relative to body 20, and a tapered transition zone 21 can be disposed between projection 24 and body 20. In an example, projection 24 can have a polygonal shape (*e.g.,* hexagonal) so as to be able to interface with a like-shaped section of a dental implant or another dental component, as detailed below.

As shown in Figs. 3A-C, the disclosure contemplates that a system or kit of impression copings 10, 10', 10" can also be provided. The size of ledges 22, 22', 22" in the kit can change, as illustrated, as can the shape of body 20, 20', 20" of each impression coping 10, 10', 10". For example, within each set of impression copings 10, 10', 10", body 20, 20', 20" can progressively increase in width along at least a certain cross-section of body 20, 20', 20", which can cause the size of ledges 22, 22', 22" to progressively increase. Further, the progressive increase of the cross-sectional width of body 20, 20', 20" can result in certain bodies 20, 20', 20" within each set of impression copings 10, 10', 10" having a different shape. In an example, some of the larger bodies 20, 20', 20" within a set of impression copings 10, 10', 10" can be part cylindrical and part paraboloid. In an example, certain impression copings 10, 10', 10" within each set (*e.g.,* larger copings 10, 10', 10") can have a body 20, 20', 20" with a coronal section that is paraboloid in shape, and an apical section that is cylindrical in shape. In other examples, the coronal section and/or the apical section of body 20, 20', 20" of certain impression copings 10, 10', 10" within each set can also progressively increase in width, as shown. In even still other examples, although not shown, the length of impression copings 10, 10', 10" can vary throughout the kit to suit the particular patient at hand. Also, the size and/or shape of the bulbous portion of head 12, 12', 12" of impression copings 10, 10', 10" can be the same between each set of copings 10, 10', 10", the size and/or shape of the bulbous portion of head 12, 12', 12" of impression copings 10, 10', 10" can be different between each set of copings 10, 10', 10", or the size and/or shape of the bulbous portion of head 12, 12', 12" of impression copings 10, 10', 10" can be the same or different within each set of copings 10, 10', 10". Although the disclosure below (and somewhat above) focuses on impression coping 10, it should be understood that all of the features and methods discussed with reference to impression coping 10 are equally applicable to impression copings 10', 10". Applicant merely uses impression coping 10 herein for reference and convenience purposes.

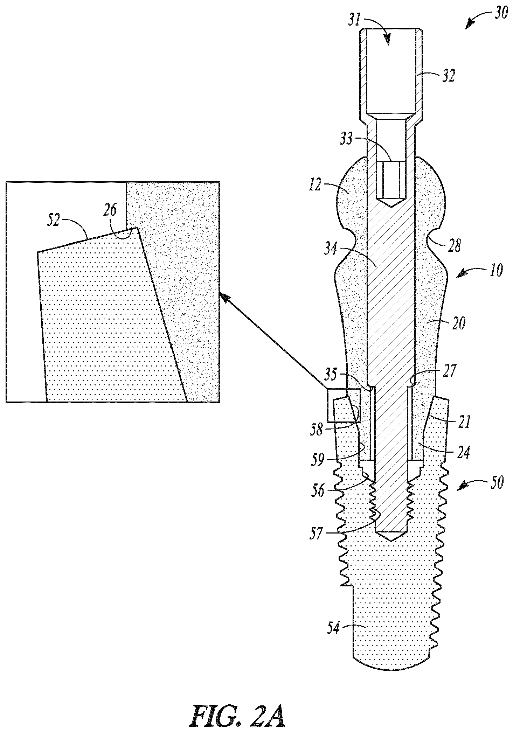

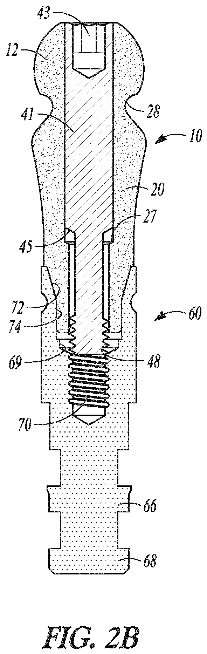

Referring back to Figs. 1A-C, various fixation members 30, 40 are also shown that can be used with impression coping 10. Fixation members 30, 40 can be different size screws, in an example. Each fixation member 30, 40 can have a head 32, 42, a body 34, 44, and a shaft 36, 46 extending from body 34, 44. Shaft 36, 46 can have a threaded section 38, 48. Further, a bore 31, 41 can extend partly or entirely through fixation member 30, 40. In an example, bore 31, 41, can extend partly into head 32, 42 and/or body 34, 44, as shown in Figs. 2A-C, and can also contain a polygonal opening 33, 43. Each polygonal opening 33, 43 can be shaped and configured to engage with a like-shaped portion of a driving tool, as described more fully below. Polygonal opening 33 can be recessed into head 32, as shown in Fig. 2A. In addition, in an example, fixation member 30 can be designed for connecting impression coping 10 with a dental implant (*e.g.,* as shown in Fig. 2A), and fixation member 40 can be designed for connecting impression coping 10 with a dental implant analog (*e.g.,* as shown in Figs. 2B-C). Alternatively, fixation members 30, 40 can be used interchangeably, of course.

Referring to Fig. 2A, an impression coping 10 is shown attached to a dental implant 50. Dental implant 50 is only exemplary and a number of suitable dental implants can be used. As an example, the dental implant can be any dental implant disclosed in U.S. Patent Pub. No. 2014/0272791. As shown, dental implant 50 can have a body 54, which can have external ridges or threading in some cases. Further, dental implant 50 can have an internal bore 56 that has a tapered section 58, a polygon-shaped section 59, and a threaded section 57. Such features can mirror the features provided with the dental implants of the '791 Publication. In an example, tapered section 58 of bore 56 can be tapered by a degree that is sufficient to establish a slight friction-fit with a portion of impression coping 10, or alternatively tapered section 58 can be tapered by a degree that is sufficient to establish a slip-fit with a portion of impression coping 10.

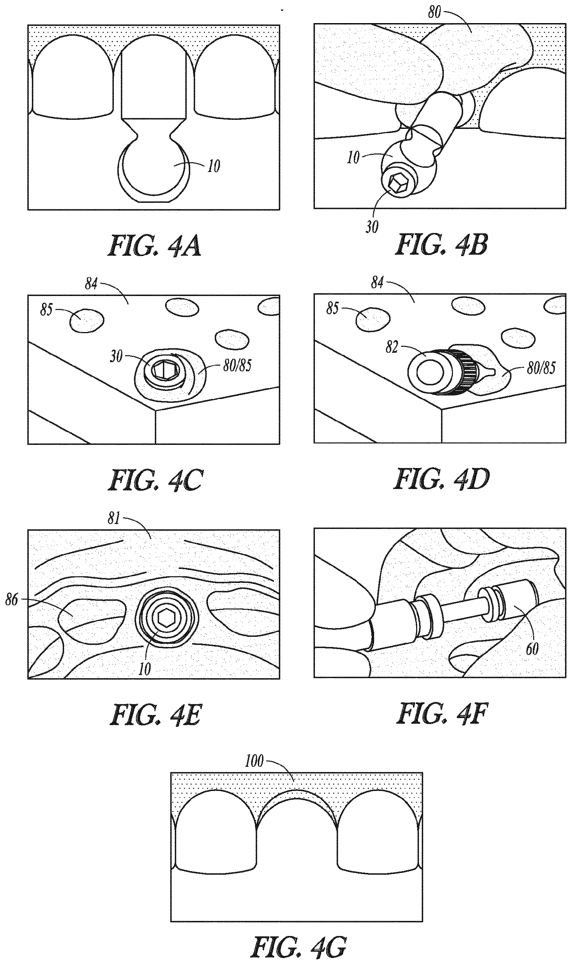

As shown in Fig. 2A, impression coping 10 can be attached to dental implant 50, such that projection 24 of impression coping 10 mates with polygon-shaped section 59 of implant 50 and tapered transition zone 21 mates with tapered section 58. In addition, an outer ledge 26 of impression coping 10 can engage with coronal end 52 of dental implant 50, as shown in the close-up view of Fig. 2A. Further, fixation member 30 can be used to attach impression coping 10 to dental implant 50. In an example, threaded section 38 of fixation member 30 can be screwed into threaded section 57 of implant 50, and an internal ledge 27 inside bore 14 of impression coping 10 can engage with a step 35 between shaft 36 and body 34 of fixation member 30. As such, screwing fixation member 30 into engagement with threaded section 57 of implant 50 can cause impression coping 10 to move towards implant 50 and become affixed to implant 50. Such screwing of fixation member 30 can be performed using a driving tool (not shown) that engages with polygonal opening 33 of fixation member 30 and, when rotated, can cause rotation of fixation member 30. As shown in Fig. 2A, a portion of head 32 of fixation member 30 can extend from impression coping 10 after impression coping 10 is attached to implant 50 - *i.e.,* head 32 can extend past coronal end 13 of impression coping 10, as shown. Such positioning of head 32 can be useful in certain procedures (*e.g.,* the open-tray procedure of Figs. 4A-G).

Referring to Figs. 2B-C, an impression coping 10 can also be attached to a dental implant analog 60. The dental implant analog shown is only exemplary, and can be any of the dental implant analogs disclosed in a co-pending application filed by the Applicant, titled "Implant Analogs and Methods" and having attorney docket number 4394.L76US1. Dental implant analog 60 can have a body 64 with a coronal projection 66 and an apical projection 68. Further, dental implant analog 60 can have a bore 69, which can have a threaded section 70, a tapered section 72, and a polygon-shaped recess 74. Tapered section 72 of bore 69 of implant analog 60 can extend from a coronal end 62 of implant analog 60 some distance apically. In addition, as noted above, implant analog 60 can have any of the other features of the implant analog of the L76US1 Application.

As shown in Figs. 2B-C, fixation member 40 can be used to attach implant analog 60 to impression coping 10. In an example, threaded section 48 of fixation member 40 can be threaded into threaded section 70 of dental implant analog 60, and a step 45 between body 44 and shaft 46 of fixation member 40 can engage with internal ledge 27 of impression coping 10. Thus, fixation member 40 can be screwed into threaded section 70 of dental implant analog 60, and cause impression coping 10 to move towards dental implant analog 60 and become affixed thereto. Once attached, projection 24 of impression coping 10 can engage with polygon-shaped recess 74 of implant analog 60, and tapered transition zone 21 of impression coping 10 can engage with tapered section 72 of bore 69 of implant analog 60. Further, as shown in Figs. 2B-C, head 42 of fixation member 40 can be flush with or recessed below coronal end 13 of impression coping 10.

As mentioned previously, Figs. 3A-C depict various kits of impression copings 10, 10', 10". Each impression coping 10, 10', 10" can include generally the same features, as reflected by the reference numerals in Fig. 3, although the size and/or shape of different impression copings 10, 10', 10" can vary. Each impression coping 10, 10', 10" can also have features that allow impression coping 10, 10', 10" to be scanned by 3D scanning equipment. The scanning equipment can be, for example, a Zfx™ Evolution 3D scanner or any other suitable 3D scanner. In an example, the shape of head 12, 12', 12" of impression coping 10, 10', 10" (*e.g.,* its flat sides 16, 16', 16" and round sides 18, 18', 18") can render impression coping 10, 10', 10" effective for 3D scanning. As such, the unique shape of head 12, 12', 12" can be considered a scanable element that renders impression coping 10, 10', 10" effective for 3D scanning. In another example, head 12, 12', 12" can simply have a unique geometry that can be scanned using scanning equipment (*e.g.,* a 3D scanner). The unique geometry can be considered a scanable element, and it should be recognized that other scanable elements can be incorporated with coping 10, 10', 10", including but not limited to laser markings or some other scanable element. In an example, as described in more detail below, when scanned using a 3D scanner, impression coping 10, 10', 10" can act as a scan body and convey data to prosthetic-modeling software about the location and/or angular position of a dental implant, which has been previously installed in a patient's jaw. For instance, the data can be conveyed to CAD/CAM software used to design and/or fabricate dental components.

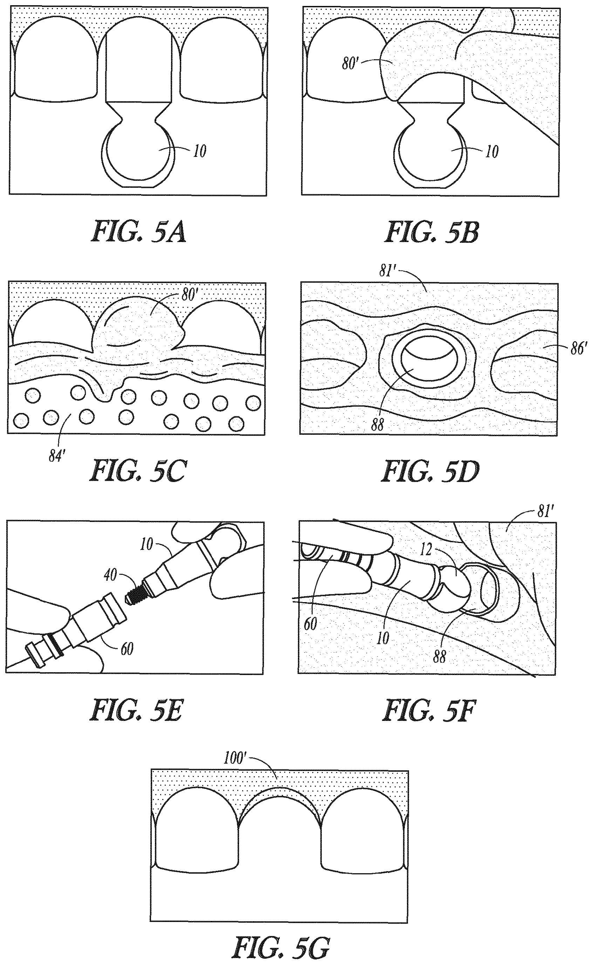

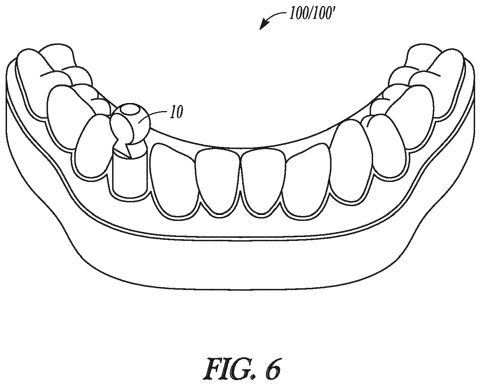

Figs. 4A-5G illustrate various dental impression and modeling procedures, and Fig. 6 illustrates a dental model 100, 100' created using the dental impression and modeling procedures of Figs. 4A-5G. In Figs. 4A-G, an open-tray impression and modeling procedure is depicted. In Figs. 5A-G, a closed-tray impression and modeling procedure is depicted. The use of such procedures with combination impression coping and scan body 10 will now be described.

As previously disclosed, any combination impression coping and scan body 10, 10', 10" disclosed herein can be used to take a dental impression using an open-tray impression technique. For example, as shown in Fig. 4A, first a dental implant 50 can be installed in a patient's jaw, and a combination impression coping and scan body 10 can then be attached thereto. Dental implant 50 can be dental implant 50 shown in Fig. 2A, any dental implant disclosed in the '791 Publication, or any other suitable dental implant.

After dental implant 50 is implanted and impression coping 10 is attached thereto, a dental impression can be taken, as shown in Figs. 4B-E. Referring to Fig. 4B, first a flowable dental impression material 80 can be placed around dental implant 50 and/or impression coping 10, as well as the patient's dental structures (*e.g.,* teeth, soft-tissue, jaw, etc.) During this process, head 32 of fixation member 30 can protrude from coronal end 13 of impression coping 10, as shown in Figs. 2A and 4B. A tray 84 can be used during or after placing flowable dental impression material 80 around impression coping 10 and/or implant 50, as described above, to allow flowable dental impression material 80 to set. As shown in Fig. 4C, tray 84 can itself include dental impression material 80 and act to stabilize flowable dental impression material 80 around impression coping 10 and/or implant 50, which allows dental impression material 80 to harden or set and form a dental impression 81 of the patient.

As shown in Fig. 4C, one or more openings 85 can be provided in tray 84. Dental impression material 80 can harden about impression coping 10 and bind substantially permanently to coping 10. Subsequently, as shown in Fig. 4D, a tool 82 can be used to remove fixation member 30 from dental implant 50 and decouple impression coping 10 from dental implant 50. In an example, tool 82 can have a section with a polygon-shaped shaft (not shown) that can be inserted through an opening 85 in tray 84 and into engagement with polygon-shaped opening 33 of fixation member 30. Then, tool 82 can be rotated to decouple fixation member 30 from implant 50 - *e.g.,* to unscrew threaded section 38 of fixation member 30 from threaded section 57 of bore 56 of dental implant 50. As shown in Fig. 4E, tray 84 with hardened dental impression material 80 and impression coping 10 embedded therein can then be removed from the patient and implant 50, creating a negative dental impression 81 of the patient's dental structures (*e.g.,* teeth, soft-tissue, jaw, etc.), which contains impression coping 10. As illustrated in Fig. 4E, dental impression 81 can have negative impressions 86 of the patient's dental structures (*e.g*., teeth, soft-tissue, jaw, etc.), and also contain impression coping 10 in one such negative impression 86.

Turning to Figs. 4F-G, a dental implant analog (*e.g.,* implant analog 60 or any other suitable dental implant analog) can be attached to impression coping 10, which is embedded within dental impression 81. In an example, a fixation member (*e.g.,* either fixation member 30, 40) can be used to attach the implant analog to impression coping 10. For instance, using implant analog 60 as an example, polygon-shaped recess 74 of bore 69 of implant analog 60 can be inserted over and receive projection 24 of impression coping 10, and a fixation member (*e.g.,* either fixation member 30, 40) can be inserted through bore 14 of impression coping 10 and into threaded section 70 of bore 69 of implant analog 60. The fixation member can then be rotated to affix dental implant analog 60 to impression coping 10.

Subsequently, a flowable dental modeling material (*e.g.,* gypsum or stone) can be poured into dental impression 81 and around dental implant analog 60 to create a dental model 100. In an example, the dental modeling material can flow into negative impressions 86 of dental impression 81 and around dental implant analog 60 so that a positive dental model 100 of the patient's dental structures (*e.g.,* teeth, soft-tissue, jaw, etc.) can be created. The dental modeling material can be allowed to set or harden with dental implant analog 60 embedded therein. Then, the fixation member (*e.g.,* either fixation member 30, 40) can be decoupled from implant analog 60 so that dental impression 81 can be removed from dental model 100. In an example, the fixation member can be unscrewed from threaded section 70 of bore 69 of implant analog 60 using a tool, and then dental impression 81 can be removed from dental model 100. As shown in Fig. 4G, dental model 100 can be left as a positive representation of the patient's dental structures (*e.g.,* teeth, soft-tissue, jaw, etc.), and implant analog 60, or another suitable implant analog, can be embedded in dental model 100 to act as a representation of the dental implant that was installed in the patient. In other words, due to the impression and dental modeling process, the location and/or angular position of implant analog 60 within dental model 100 can be representative or substantially match the location and/or angular position of the dental implant that was installed in the patient. In this way, dental model 100 and implant analog 60 can be used to create or select other suitable prosthetic components (*e.g.,* abutments, prosthetic teeth such as a crown, etc.).

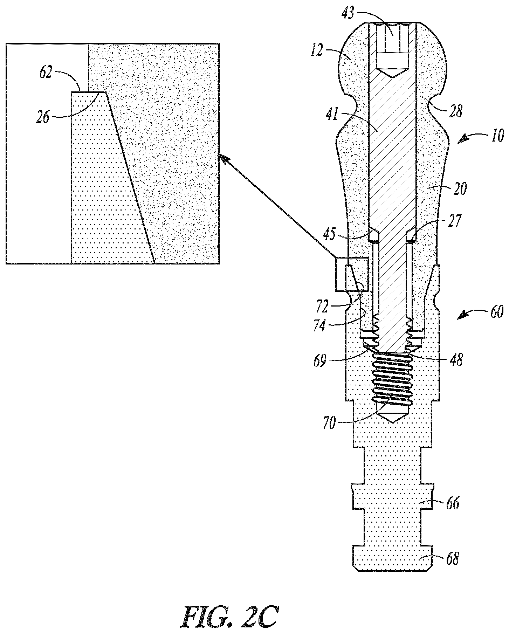

In a particular example, a scan body can be attached to implant analog 60 within dental model 100 and the scan body can be scanned using 3D scanning equipment to assist with the creation of certain prosthetic components. For instance, as shown in Fig. 6, an impression coping 10 that is the same as impression coping 10 remaining in dental impression 81 can be attached to implant analog 60 and used as a scan body. Or, another scan body can be attached to implant analog 60. Using combination impression coping and scan body 10 as an example, impression coping 10 can be attached to implant analog 60, as shown in Figs. 2C and 6, and then scanned using a 3D scanner. At the same time, the remainder of dental model 100 can be scanned to digitize the patient's surrounding dental structures (*e.g.,* teeth, soft-tissue, jaw, etc.) Data from the 3D scan can then be transferred to prosthetic design software where a digital model of dental model 100, impression coping 10, dental implant analog 60, and/or dental implant 50 can be created. An example of such a digital modeling process is disclosed in U.S. Patent Nos. 8,185,224, 8,612,037, and 8,855,800. Fig. 6 illustrates an impression coping 10 attached to dental model 100, which can be scanned as detailed above.

Using the accurate digital model obtained by way of scanning dental model 100 and a scan body (Fig. 6), various prosthetic components can then be designed using prosthetic design software (*e.g.,* CAD/CAM software). The design of custom prosthetic components using software is described in the '224, '037, and '800 Patents referenced above, and any techniques disclosed therein can be used with the present method to create custom components. For instance, a custom abutment can be designed, and/or a custom prosthetic tooth (*e.g.,* a crown). In an alternative example, suitable pre-fabricated abutments can be attached to dental model 100 via implant analog 60 until an appropriate pre-fabricated abutment is located. The appropriate pre-fabricated abutment can then be used with the actual patient's dental implant - *i.e.,* the pre-fabricated abutment can be installed on the patient's dental implant, after which a prosthetic tooth can be attached to the abutment. As such, various combinations are possible and it should be appreciated that impression coping 10 can be used in an open-tray impression procedure similar to that described above to create a dental model, which can be used to select and/or design various prosthetic components (*e.g.,* abutments, crowns, etc.) for use with the patient's actual dental implant.

Figs. 5A-G illustrate a closed-tray impression procedure using a combination impression coping and scan body 10, as disclosed herein. As such, combination impression coping and scan body 10 is versatile and can be used in open-tray and closed-tray impression techniques, as detailed below. First, as shown in Fig. 5A, a dental implant (*e.g.,* dental implant 50) can be inserted into the jaw of a patient, and a combination impression coping and scan body 10 can then be attached thereto. Of course, the dental implant can be allowed to affix to the patient's jaw bone through healing and possible use of a healing abutment after initial implantation. In this case, the healing abutment can be removed prior to attaching combination impression coping and scan body 10 to the dental implant.

As shown in Figs. 5B-C, a flowable dental impression material 80' can be applied around impression coping 10 and/or the patient's surrounding dental structures (*e.g.,* teeth, soft-tissue, jaw, etc.) Then, as shown in Fig. 5C, a suitable tray 84' with additional dental impression material 80' can be positioned over impression coping 10 and the patient's surrounding dental structures to create a dental impression 81' of the patient. While tray 84' is positioned on the patient, dental impression material 80' can be allowed to set or harden to create dental impression 81'. In the closed-tray technique, as shown in Fig. 5D, impression coping 10 can be configured to remain coupled to dental implant 50 when tray 84' and dental impression 81' are removed from the patient's dental structures. As an example, although not shown, fixation member 40 might be used to connect impression coping 10 to dental implant 50. As such, fixation member 40 could be flush with or recessed below coronal end 13 of impression coping 10, similar to as shown in Fig. 2C with respect to implant analog 60. In this way, an appropriate negative impression of impression coping 10 can be taken using dental impression material 80'. In other words, since fixation member 40 can be flush with or recessed below coronal end 13 of impression coping 10, when tray 84' and dental impression 81' are removed from the patient, impression coping 10 can remain coupled with dental implant 50 and create a suitable negative impression of coping 10 inside dental impression 81'. An exemplary negative impression 88 of impression coping 10 is shown in Fig. 5D, along with other negative impressions of the patient's surrounding dental structures (*e.g.,* teeth, soft-tissue, jaw, etc.)

As shown in Figs. 5E-F, impression coping 10 can be removed from the patient and an appropriate implant analog (*e.g.,* implant analog 60) can be attached to impression coping 10. For example, implant analog 60 can be attached to impression coping 10 in the manner shown and described with reference to Fig. 2C. Then, as shown in Fig. 5F, impression coping 10/implant analog 60 structure can be manipulated and impression coping 10 can be inserted into negative impression 88. In an alternate example, impression coping 10 can be inserted into negative impression 88, and then a suitable implant analog (*e.g.,* implant analog 60) can be attached to impression coping 10, instead of at the same time.

Dental impression 81' with impression coping 10 and implant analog 60 attached thereto within negative impression 88 can then be used to fabricate a dental model 100' corresponding to dental impression 81'. In an example, dental impression 81' can be sent to a laboratory to fabricate dental model 100'. Flowable dental modeling material can be poured into dental impression 81' around implant analog 60 and allowed to set or harden to create dental model 100' with dental implant analog 60 embedded therein. Then, as shown in Figs. 5G and 6, dental model 100' can be separated from dental impression 81' while leaving impression coping 10 coupled to dental implant analog 60. As such, impression coping 10 can be pulled out of negative impression 88 of dental impression 81' once more to remain with dental model 100' as dental model 100' is separated from dental impression 81'. Of course, impression coping 10 could instead first be decoupled from dental implant analog 60, dental model 100' separated from dental impression 81', and then impression coping 10 removed from negative impression 88 of dental impression 81' and attached to implant analog 60 of dental model 100' in separated steps, if preferred. The point is that the same impression coping 60 used to form dental impression 81' can remain with dental model 100' for subsequent use, as discussed below.

Next, impression coping 10 that is part of dental model 100' can be used as a scan body, as detailed previously. Thus, as an example, combination impression coping and scan body 10 (Fig. 6) can be scanned using a 3D scanner, along with the remainder of dental model 100', to digitize the patient's surrounding dental structures (*e.g.,* teeth, soft-tissue, jaw, etc.) Data from the 3D scan can then be transferred to prosthetic design software where a digital model of dental model 100', impression coping 10, dental implant analog 60, and/or dental implant 50 can be created.

Using the accurate digital model obtained by way of scanning dental model 100' and combination impression coping and scan body 10 (Fig. 6), various prosthetic components can then be designed using prosthetic design software. For instance, a custom abutment can be designed, and/or a custom prosthetic tooth (*e.g.,* a crown). In an alternative example, suitable pre-fabricated abutments can be attached to dental model 100' via implant analog 60 until an appropriate pre-fabricated abutment is located. The appropriate pre-fabricated abutment can then be used with the actual patient's dental implant - *i.e.,* the pre-fabricated abutment can be installed on the patient's dental implant, after which a prosthetic tooth can be attached to the abutment. As such, various combinations are possible and it should be appreciated that impression coping 10 can be used in a closed-tray impression procedure similar to that described above to create a dental model, which can be used to select and/or design various prosthetic components (*e.g.,* abutments, crowns, etc.) for use with the patient's actual dental implant.

Of course, in an alternate example, a different scan body besides combination impression coping and scan body 10 could be used with dental model 100' and scanned using a 3D scanner. In this case, combination impression coping and scan body 10 could be decoupled and removed from implant analog 60, after which a suitable scan body could be attached to implant analog 60. However, since combination impression coping and scan body 10 can itself act as a scan body, such a procedure might be suboptimal as it requires additional steps and might be susceptible to causing human error.

It will be readily understood to those skilled in the art that various other changes in the details, material, and arrangements of the parts and method stages which have been described and illustrated in order to explain the nature of the inventive subject matter can be made without departing from the principles and scope of the inventive subject matter as expressed in the subjoined claims.

## Claims

1. A dental impression coping comprising:
a coping body (20) having an exterior surface configured for receiving a dental impression material, wherein the body includes a scanable element comprising (i) a head (12) with a bulbous head geometry having at least a first flat side (16) and a first round side (18) and (ii) a body having at least one ledge (22), the flat side of the head extending from a coronal end of the impression coping to the ledge of the body; and
an implant interface for coupling the dental impression coping to a dental implant, the interface including a projection (24) extending apically relative to the body.

2. The dental impression coping of claim 1, wherein the scanable element comprises a unique head geometry that is configured for scanning using a 3D scanner.

3. The dental impression coping of any one of claims 1-2, further comprising a bore extending through the coping body.

4. The dental impression coping of claim 3, wherein the head has a second flat side and a second round side, and the first and second flat sides are substantially parallel to each other.

5. The dental impression coping of claim 4, wherein the first and second round sides of the head are interposed between the first and second flat sides.

6. The dental impression coping of any one of claims 1-5, wherein the implant interface comprises a tapered transition zone and the projection which has a polygon-shape..

7. A system comprising the dental impression coping of claim 6 and a dental implant, the dental implant comprising a body and a bore extending into the body, wherein the bore includes a tapered section shaped to interface with the tapered transition zone of the implant interface of the dental impression coping, and a polygon-shaped recess shaped to interface with the polygon-shaped projection of the dental impression coping.

8. The system of claim 7, further comprising a fixation member with a threaded portion, wherein:
the coping body comprises a bore extending through the coping body; and
the bore of the implant comprises a threaded section, the fixation member being configured for insertion through the bore of the coping body and into the bore of the implant, such that the threaded portion of the fixation member is configured to thread into the threaded section of the bore of the implant to couple the dental impression coping to the dental implant.

9. The dental impression coping of any of claims 3-6, wherein the bore has an internal ledge configured to engage with a dental component.

10. A method of producing a dental model comprising:
receiving a dental impression with a dental impression coping as claimed in any of claims 1 to 6 or 9 disposed therein;
pouring dental modeling material into the dental impression and around a dental implant analog coupled to the impression coping;
allowing the dental modeling material to harden around the implant analog and create a dental model comprising at least some positive representations of a patient's teeth;
removing the dental model from the dental impression with the dental implant analog embedded in the dental model; and
scanning the dental model and the impression coping, while the impression coping is coupled to the dental implant analog, using a 3D scanner to create a digital representation of at least part of the dental model.

11. The method of claim 10, further comprising removing the dental model from the dental impression with the dental implant analog embedded in the dental model and the dental implant analog coupled to the impression coping, such that the impression coping is removed from the dental impression as the dental model is removed from the dental impression.

12. The method of claim 10, further comprising scanning the scanable element of the impression coping to create the digital representation of at least part of the dental model.

## Patentansprüche

1. Dentalabformkappe, umfassend:
einen Abformkörper (20)
mit einer Außenfläche, die konfiguriert ist, um ein Dentalabformmaterial
aufzunehmen, wobei der Körper ein scanbares Element beinhaltet, umfassend (i) einen Kopf (12) mit einer bauchigen Kopfgeometrie mit mindestens einer ersten ebenen Seite (16) und einer ersten runden Seite (18) und (ii) einem Körper mit mindestens einem Absatz (22), wobei sich die ebene Seite des Kopfs vom koronalen Ende der Abformkappe zum Absatz des Körpers erstreckt; und
eine Implantatgrenzfläche zum Verbinden der Dentalabformkappe mit einem Dentalimplantat, wobei die Grenzfläche einen Vorsprung (24) beinhaltet, der sich apikal relativ zum Körper erstreckt.

2. Dentalabformkappe nach Anspruch 1, wobei das scanbare Element eine eindeutige Kopfgeometrie umfasst, die zum Scannen mithilfe eines 3D-Scanners konfiguriert ist.

3. Dentalabformkappe nach einem der Ansprüche 1 bis 2, ferner umfassend ein Loch, das sich durch den Abformkörper erstreckt.

4. Dentalabformkappe nach Anspruch 3, wobei der Kopf eine zweite ebene Seite und eine zweite runde Seite aufweist, und die erste und zweite ebene Seite im Wesentlichen parallel zueinander sind.

5. Dentalabformkappe nach Anspruch 4, wobei die erste und zweite runde Seite des Kopfs zwischen der ersten und zweiten ebenen Seite angeordnet sind.

6. Dentalabformkappe nach einem der Ansprüche 1 bis 5, wobei die Implantatgrenzfläche eine sich verjüngende Übergangszone und den Vorsprung umfasst, der eine polygonale Form aufweist.

7. System, umfassend die Dentalabformkappe nach Anspruch 6 und ein Dentalimplantat, wobei das Dentalimplantat einen Körper und ein Loch umfasst, das sich in den Körper erstreckt, wobei das Loch einen sich verjüngenden Abschnitt, der geformt ist, um eine Grenzfläche zur sich verjüngenden Übergangsfläche der Implantatgrenzfläche der Dentalabformkappe zu bilden, und eine polygonale Aussparung, die geformt ist, um eine Grenzfläche zum polygonalen Vorsprung der Dentalabformkappe zu bilden, umfasst.

8. System nach Anspruch 7, ferner umfassend ein Befestigungselement mit einem Gewindeabschnitt, wobei:
der Abformkörper ein Loch umfasst, das sich durch den Abformkörper erstreckt; und
das Loch des Implantats einen Gewindeabschnitt umfasst, wobei das Befestigungselement zum Einsetzen durch das Loch des Abformkörpers und in das Loch des Implantats konfiguriert ist, so dass der Gewindeabschnitt des Befestigungselements konfiguriert ist, um den Gewindeabschnitt des Lochs gewindemäßig in Eingriff zu nehmen, um die Dentalabformkappe mit dem Dentalimplantat zu verbinden.

9. Dentalabformkappe nach einem der Ansprüche 3 bis 6, wobei das Loch einen Innenabsatz aufweist, der konfiguriert ist, um eine Dentalkomponente in Eingriff zu nehmen.

10. Verfahren zum Herstellen eines Dentalmodells, umfassend:
ein Empfangen einer Dentalabformung mit einer Dentalabformkappe nach einem der Ansprüche 1 bis 6 oder 9, die darin angeordnet ist; ein Gießen von Dentalmodelliermaterial in die Dentalabformung und um eine Dentalimplantatentsprechung, die mit der Abformkappe verbunden ist;
ein Aushärtenlassen des Dentalmodelliermaterials um die Implantantentsprechung und ein Erzeugen eines Dentalmodells, umfassend mindestens einige Positivdarstellungen der Zähne eines Patienten;
ein Entfernen des Dentalmodells aus der Dentalabformung, wobei die Dentalimplantatentsprechung im Dentalmodell eingebettet ist; und
ein Scannen des Dentalmodells und der Abformkappe, während die Abformkappe mit der Dentalimplantatentsprechung gekoppelt ist, mithilfe eines 3D-Scanners, um eine digitale Darstellung mindestens eines Teils des Dentalmodells zu erzeugen.

11. Verfahren nach Anspruch 10, ferner umfassend ein Entfernen des Dentalmodells aus der Dentalabformung, wobei die Dentalimplantatentsprechung im Dentalmodell eingebettet ist und die Dentalimplantatentsprechung mit der Abformkappe verbunden ist, so dass die Abformkappe aus der Dentalabformung entfernt wird, wenn das Dentalmodell aus der Dentalabformung entfernt wird.

12. Verfahren nach Anspruch 10, ferner umfassned ein Scannen des scanbaren Elements der Abformkappe, um die digitale Darstellung mindestens eines Teils des Dentalmodells zu erzeugen.

## Revendications

1. Coiffe d'empreinte dentaire comprenant : un corps de coiffe (20) ayant une surface extérieure configurée pour recevoir un matériau d'empreinte dentaire,
dans laquelle le corps comprend un élément numérisable comprenant (i) une tête (12) avec une géométrie de tête bulbeuse ayant au moins un premier côté plat (16) et un premier côté rond (18) et (ii) un corps ayant au moins un rebord (22), le côté plat de la tête s'étendant d'une extrémité coronale de la coiffe d'empreinte jusqu'au rebord du corps ; et
une interface d'implant destinée à coupler la coiffe d'empreinte dentaire à un implant dentaire, l'interface comprenant une saillie (24) s'étendant apicalement par rapport au corps.

2. Coiffe d'empreinte dentaire selon la revendication 1, dans laquelle l'élément numérisable comprend une géométrie de tête unique qui est configurée pour une numérisation à l'aide d'un scanner 3D.

3. Coiffe d'empreinte dentaire selon l'une quelconque des revendications 1 à 2, comprenant en outre un alésage s'étendant à travers le corps de coiffe.

4. Coiffe d'empreinte dentaire selon la revendication 3, dans laquelle la tête a un deuxième côté plat et un deuxième côté rond, et les premier et deuxième côtés plats sont sensiblement parallèles l'un à l'autre.

5. Coiffe d'empreinte dentaire selon la revendication 4, dans laquelle les premier et deuxième côtés ronds de la tête sont interposés entre les premier et deuxième côtés plats.

6. Coiffe d'empreinte dentaire selon l'une quelconque des revendications 1 à 5, dans laquelle l'interface d'implant comprend une zone de transition effilée et la saillie qui a une forme de polygone.

7. Système comprenant la coiffe d'empreinte dentaire selon la revendication 6 et un implant dentaire, l'implant dentaire comprenant un corps et un alésage s'étendant dans le corps, dans lequel l'alésage comprend une section effilée profilée pour s'interfacer avec la zone de transition effilée de l'interface d'implant de la coiffe d'empreinte dentaire, et un évidement en forme de polygone profilé pour s'interfacer avec la saillie en forme de polygone de la coiffe d'empreinte dentaire.

8. Système selon la revendication 7, comprenant en outre un élément de fixation avec une partie filetée, dans lequel : le corps de coiffe comprend un alésage s'étendant à travers le corps de coiffe ; et l'alésage de l'implant comprend une section filetée, l'élément de fixation étant configuré pour être inséré à travers l'alésage du corps de coiffe et dans l'alésage de l'implant, de sorte que la partie filetée de l'élément de fixation est configurée pour se visser dans la section filetée de l'alésage de l'implant pour coupler la coiffe d'empreinte dentaire à l'implant dentaire.

9. Coiffe d'empreinte dentaire selon l'une quelconque des revendications 3 à 6, dans laquelle l'alésage a un rebord interne configuré pour s'engager avec un composant dentaire.

10. Procédé de production d'un modèle dentaire comprenant :
la réception d'une empreinte dentaire avec une coiffe d'empreinte dentaire selon l'une quelconque des revendications 1 à 6 ou 9 disposée à l'intérieur ; la coulée d'un matériau de modelage dentaire dans l'empreinte dentaire et autour d'un analogue d'implant dentaire couplé à la coiffe d'empreinte ;
l'autorisation au matériau de modelage dentaire de durcir autour de l'analogue d'implant et de créer un modèle dentaire comprenant au moins certaines représentations positives des dents d'un patient ;
le retrait du modèle dentaire de l'empreinte dentaire avec l'analogue d'implant dentaire intégré dans le modèle dentaire ; et
la numérisation du modèle dentaire et de la coiffe d'empreinte, tandis que la coiffe d'empreinte est couplée à l'analogue d'implant dentaire, à l'aide d'un scanner 3D pour créer une représentation numérique d'au moins une partie du modèle dentaire.

11. Procédé selon la revendication 10, comprenant en outre le retrait du modèle dentaire de l'empreinte dentaire avec l'analogue d'implant dentaire intégré dans le modèle dentaire et l'analogue d'implant dentaire couplé à la coiffe d'empreinte, de telle sorte que la coiffe d'empreinte soit retirée de l'empreinte dentaire tandis que le modèle dentaire est retiré de l'empreinte dentaire.

12. Procédé selon la revendication 10, comprenant en outre la numérisation de l'élément numérisable de la coiffe d'empreinte pour créer la représentation numérique d'au moins une partie du modèle dentaire.
